(19) **Europäisches Patentamt / European Patent Office / Office européen des brevets**

(11) **EP 2 749 447 B1**

(12) **FASCICULE DE BREVET EUROPEEN**

(45) Date de publication et mention
de la délivrance du brevet:
**29.05.2019 Bulletin 2019/22**

(51) Int Cl.:
**B60M 3/06** *(2006.01)* **B60L 9/00** *(2019.01)*
**B60L 11/18** *(2006.01)*

(21) Numéro de dépôt: **13197772.0**

(22) Date de dépôt: **17.12.2013**

(54) **Procédé d'optimisation du fonctionnement d'une sous-station réversible de traction et dispositifs associés**

Optimierungsverfahren der Funktion eines reversiblen Bahnunterwerks, und entsprechende Vorrichtungen

Method for optimising the operation of a reversible traction substation and related devices

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2012 FR 1262886**

(43) Date de publication de la demande:
**02.07.2014 Bulletin 2014/27**

(73) Titulaire: **ALSTOM Transport Technologies**
**93400 Saint-Ouen (FR)**

(72) Inventeur: **Cornic, Daniel**
**78112 Fourqueux (FR)**

(74) Mandataire: **Lavoix**
**2, place d'Estienne d'Orves**
**75441 Paris Cedex 09 (FR)**

(56) Documents cités:
**EP-A1- 1 985 490      WO-A1-2009/153416**
**WO-A1-2012/111607   CN-B- 101 376 344**
**JP-A- H07 304 353     JP-A- 2008 074 183**
**JP-A- 2009 067 205**

**Description**

L'invention est relative à un procédé d'optimisation du fonctionnement d'une sous-station réversible de traction d'un système d'alimentation en puissance électrique de véhicules ferroviaires, le système étant situé à l'interface entre un réseau de fourniture en courant alternatif et une ligne d'alimentation en courant continu, disposée le long d'une voie et à laquelle peut être raccordé électriquement un véhicule ferroviaire, la sous-station réversible étant, entre autres, commandable en mode de fonctionnement en traction pour transférer à la ligne une énergie électrique délivrée par le réseau et en mode de fonctionnement en freinage pour transférer au réseau une énergie électrique excédentaire de régénération captée sur la ligne.

Le document EP 1 985 490 A1 décrit un tel système d'alimentation en puissance électrique de véhicules ferroviaires à partir de sous-stations réversibles de traction.

Chaque sous-station réversible du système comporte un convertisseur propre à être activé pour fonctionner :

- soit en redresseur, de manière à acheminer une puissance électrique du réseau vers la ligne pour alimenter en énergie électrique un véhicule, situé au voisinage de la sous-station, dont les moteurs fonctionnent en traction ;
- soit en onduleur, de manière à acheminer une puissance électrique de la ligne vers le réseau pour récupérer une énergie électrique d'un véhicule, situé au voisinage de la sous-station, dont les moteurs fonctionnent en freinage.

Lorsque le convertisseur fonctionne en redresseur, la sous-station est dite en mode de fonctionnement en traction, et lorsque le convertisseur fonctionne en onduleur, la sous-station est dite en mode de fonctionnement en freinage. Enfin, lorsque le convertisseur est inactif, la sous-station est dite en mode de fonctionnement en veille.

Dans l'un ou l'autre des modes de fonctionnement précités de la sous-station, le point de fonctionnement du convertisseur dépend d'une pluralité de paramètres de configuration dont les valeurs sont fixées au déploiement du système. En particulier, la sous-station est configurée pour, en mode de fonctionnement en traction, utiliser une caractéristique courant/tension en traction, et, en mode de fonctionnement en freinage, une caractéristique courant/tension en freinage. Ces caractéristiques en traction et en freinage sont fixes.

Or, en mode en traction, il convient de maximiser la tension appliquée par le convertisseur à la ligne $U_{ssk}$ , pour, à puissance constante, réduire le courant injecté sur la ligne par le convertisseur et ainsi réduire les pertes par effet Joule le long de la ligne jusqu'au véhicule à alimenter.

En mode en freinage, il convient au contraire de minimiser la tension appliquée par le convertisseur à la ligne $U_{ssk}$ pour augmenter la distance sur laquelle l'énergie de freinage peut être récupérée par une sous-station.

Ainsi, l'efficacité énergétique d'une sous-station de l'art antérieur est définie lors de la phase de conception du système et est figée lors du déploiement de ce système.

Le document CN 101 376 344 B divulgue un procédé de répartition de l'énergie fournie à un train (ou récupérée lors du freinage d'un train) entre une sous-station d'alimentation électrique et un dispositif de stockage d'énergie. En traction (en freinage), des paramètres de répartition optimaux a et b sont déterminés à chaque instant de manière à ce que a% de l'énergie à fournir au train (a% de l'énergie à récupérer du train) soit délivré par (fourni à) la sous-station, le reste b% étant délivré par (fourni au) le dispositif de stockage d'énergie. Les paramètres de répartition sont calculés notamment en fonction d'un état de charge instantané de la capacité constitutive du dispositif de stockage d'énergie.

L'invention a donc pour but de pallier au problème précité, en proposant notamment un procédé permettant une optimisation automatique et dynamique du point de fonctionnement du convertisseur d'une sous-station réversible de traction, en fonction des valeurs des paramètres d'exploitation des différentes sous-stations du système au cours de son utilisation.

A cette fin, l'invention a pour objet un procédé d'optimisation, un support d'enregistrement d'informations, une sous-station réversible et un système d'alimentation en puissance électrique de véhicules ferroviaires selon les revendications annexées

L'invention et ses avantages seront mieux compris à la lecture de la description qui va suivre, donnée uniquement à titre d'exemple, et faite en se référant aux dessins annexés sur lesquels :

- la figure 1 est une représentation schématique d'un réseau ferroviaire équipé d'un système d'alimentation comportant une pluralité de sous-stations réversibles, réseau ferroviaire sur lequel est propre à circuler au moins un véhicule ferroviaire ;
- la figure 2 est un graphe représentant différentes caractéristiques courant/tension en traction pour une sous-station réversible de la figure 1 ;
- la figure 3 est un graphe représentant différentes caractéristiques courant/tension en freinage pour une sous-station réversible de la figure 1 ;
- la figure 4 est un diagramme blocs du procédé d'optimisation des paramètres de configuration mis en oeuvre par une sous-station du système de la figure 1 ; et,
- la figure 5 est un diagramme blocs de l'algorithme de détermination de la valeur instantanée d'un mode de fonctionnement à privilégier.

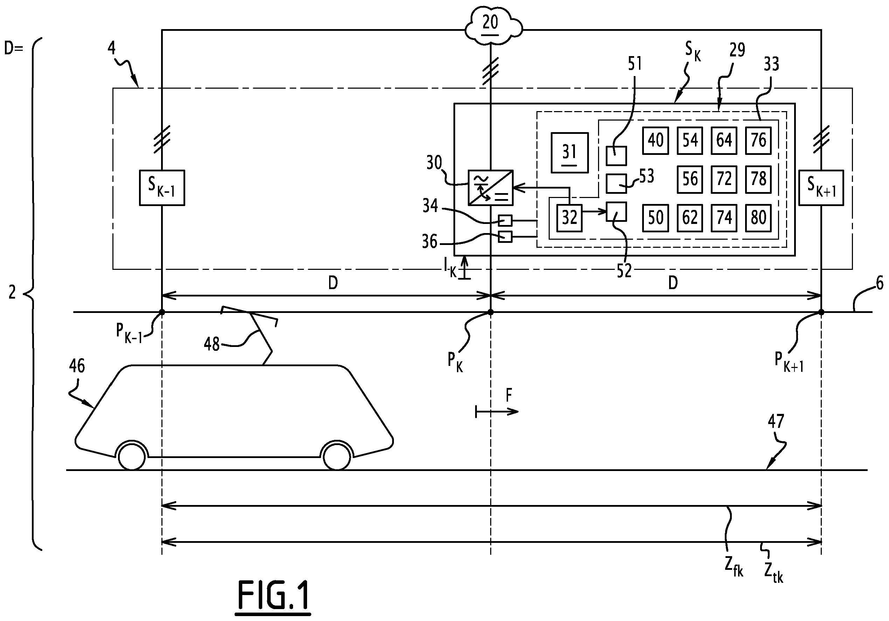

La figure 1 représente un réseau ferroviaire 2 équipé d'un système 4 d'alimentation.

Le système 4 se situe à l'interface entre un réseau 20 de fourniture de courant et une ligne 6 d'alimentation qui est disposée le long d'une voie 47 de circulation de véhicules ferroviaires, tels que le véhicule 46. Celui-ci est raccordé électriquement à la ligne 6 par l'intermédiaire d'un pantographe 48 classique.

Le réseau 20 est un réseau propre à délivrer une tension alternative Vn qui est une haute tension alternative triphasée. Par haute tension alternative, on désigne ici une tension alternative comprise entre 1 000 et 50 000 V AC. Conformément à l'enseignement de la demande de brevet FR 28 73 332, ce réseau 20 peut également être un réseau de basse tension alternative triphasée. Ici, par basse tension alternative triphasée, on désigne une tension inférieure à 1 000 V AC. Typiquement, ce réseau de basse tension alternative triphasée sera alors un réseau de basse tension dont la tension alternative est comprise entre 400 et 1 000 V AC.

La tension nominale sur la ligne 6 est une tension continue dont la valeur nominale Uc_nom est de 750, 1500, ou 3000 V DC et dont les variations autour de Uc_nom sont comprises entre Uc_min et Uc_max, comme spécifié dans la norme européenne EN 50163.

Le système 4 comporte une pluralité de sous-stations réversibles de traction, identiques les unes des autres, réparties à intervalles réguliers le long de la ligne 6. Pour simplifier la figure 1, seules trois sous-stations $S_{k-1}$, $S_k$ et $S_{k+1}$ ont été représentées.

L'indice k représente le numéro d'ordre de chaque sous-station en partant d'une sous-station $S_0$ située à une extrémité de la ligne 6 et en se déplaçant dans la direction F indiquée sur la figure 1.

Les sous-stations $S_k$ sont électriquement raccordées au réseau 20.

Chaque sous-station $S_k$ est électriquement raccordée à la ligne 6 en un point $P_k$ de raccordement. Le point $P_k$ est séparé du point $P_{k+1}$ et du point $P_{k-1}$ par une distance D. Cette distance D est généralement supérieure à plusieurs centaines de mètres, mais dans tous les cas suffisamment courte pour que la sous-station $S_k$ puisse alimenter en traction un véhicule dont le pantographe est situé au niveau du point $P_{k+1}$, alors que la sous-station $S_{k+1}$ est inactive. Ici la distance D est comprise entre 1000 et 2000 m pour une tension nominale $U_{C-nom}$ de 750 V DC et peut aller jusqu'à 20 km pour une tension nominale $U_{C-nom}$ de 3000 V DC.

Par alimentation en traction, on désigne le fait qu'une sous-station génère sur la ligne 6 suffisamment de puissance pour alimenter les moteurs de traction des véhicules 46.

Chaque sous-station $S_k$ est associée à une zone $Z_{tk}$ d'alimentation en traction qui est un segment de la ligne 6 centré autour du point $P_k$. La demi-longueur $T_k$ de ce segment est définie par la relation suivante :

$$T_k = \left(U_{ss\,max\,k} - U_{C\,min}\right)/\left(\rho I_{max}\right)$$

où :

- $U_{ssmaxk}$ est la tension maximale fonctionnant en traction au niveau du point $P_k$ que peut générer la sous-station $S_k$,
- $U_{Cmin}$ est la tension minimale admissible sur la ligne 6,
- $\rho$ est la résistance linéique de la ligne 6, et
- $I_{max}$ est l'intensité maximale admissible du courant circulant sur la ligne 6.

A titre de remarque, $U_{ssmaxk}$ est supérieure ou égale à $U_{Cnom}$. La distance D est choisie égale ou légèrement inférieure à la distance $T_k$ de sorte que, quelle que soit la position du véhicule le long de la ligne 6, celui-ci se trouve toujours simultanément dans deux zones $Z_{tk}$ et $Z_{tk+1}$. Un tel choix permet de garantir que les véhicules puissent être alimentés quelle que soit leur position le long de la ligne 6, même en cas de panne de l'une des sous-stations $S_k$.

La sous-station $S_k$ est également associée à une zone $Z_{fk}$ de récupération de l'énergie de freinage d'un véhicule, il s'agit d'un segment de la ligne 6 centré autour du point $P_k$. La demi-longueur $F_k$ de ce segment est définie par la relation suivante :

$$F_k = \left(U_{C\,max} - U_{C3\,min\,k}\right)/\left(\rho I_{max}\right)$$

où :

- $U_{Cmax}$ est la tension maximale admissible sur la ligne 6, et
- $U_{C3mink}$ est une limite basse pour la valeur d'un seuil $U_{C3k}$ qui sera défini plus loin.

Ici, $U_{C3mink}$ est choisi inférieur ou égal à $U_{Cnom}$. Ainsi, la distance $F_k$ est supérieure ou égale à la distance D.

Par exemple, la limite $U_{C3mink}$ est choisie égale à 700 V DC pour un système dont la tension nominale $U_{C-nom}$ vaut 750 V.

La zone $Z_{fk}$ est telle que, quelle que soit la position du véhicule qui freine à l'intérieur de cette zone $Z_{fk}$, la sous-station $S_k$ peut récupérer tout ou partie de l'énergie de freinage de ce véhicule.

Etant donné que la distance $F_k$ est supérieure ou égale à la distance D, il est donc possible de récupérer l'énergie de freinage d'un véhicule soit au niveau du point $P_{k-1}$, soit au niveau du point $P_{k+1}$. Ainsi, même si la sous-station $S_k$ est hors service, les sous-stations $S_{k-1}$ et $S_{k+1}$ peuvent permettre de récupérer l'énergie de freinage du véhicule ferroviaire et ceci quelle que soit la position du véhicule ferroviaire entre les points $P_{k-1}$ et $P_{k+1}$. Il est donc possible de garantir que toute l'énergie de freinage

La sous-station réversible $S_k$ comporte un convertisseur quatre quadrants 30 raccordé, d'un côté, au réseau 20 et, de l'autre, au point $P_k$ sur la ligne 6.

Ce convertisseur 30 est apte à redresser la tension triphasée du réseau 20 pour délivrer sur la ligne 6 une tension continue redressée comprise entre $U_{ssmaxk}$ et $U_{Cmin}$.

Le convertisseur 30 est également apte à onduler la tension continue présente sur la ligne 6 pour délivrer sur le réseau 20 une tension triphasée construite à partir de cette tension continue comprise entre $U_{C3mink}$ et $U_{Cmax}$. En onduleur, le convertisseur 30 permet d'absorber un courant continu $I_k$ au maximum égal à un seuil $I_{kmax}$.

Dans l'état actif, le convertisseur 30 est apte à basculer du fonctionnement en redresseur vers le mode de fonctionnement en onduleur, et vice-versa, en moins de 10 ms pour éviter les pertes de freinage au niveau du véhicule.

A cet effet, le convertisseur 30 est, par exemple, formé d'un pont redresseur raccordé en parallèle à un onduleur. Ici, le pont redresseur est un pont redresseur commandé réalisé à partir de thyristors ou de transistors de puissance tels que des transistors IGBT (Insulated Gate Bipolar Transistor). Le pont redresseur commandé permet de générer une tension fixe de 750 V DC sur la ligne 6 et ceci même en cas de variations de plus de 50% de la puissance consommée par la charge électrique alimentée par l'intermédiaire de la ligne 6.

La sous-station $S_k$ comporte un calculateur programmable 29. Celui-ci comporte un moyen de calcul 31, tel qu'un processeur, une horloge (non représentée), des moyens de mémorisation 33, tel qu'une mémoire vive et une mémoire morte, et une interface d'entrée/sortie (non représentée) pour la connexion du calculateur à des périphériques, tels que le convertisseur 30 ou des capteurs de mesure 34, 36. Le processeur est propre à exécuter les instructions de programmes d'ordinateurs stockées dans les moyens de mémorisation 33.

Le convertisseur 30 est un convertisseur commandable. A cet effet, la sous-station $S_k$ comporte une unité de commande 32 propre à commander le convertisseur 30 pour le basculer d'un état inactif à un état actif, et inversement, et, dans l'état actif, à le faire fonctionner en tant que redresseur et, en alternance, en tant qu'onduleur.

Lorsque le convertisseur est dans l'état inactif, la sous-station est dite en mode veille ; lorsque le convertisseur est dans l'état actif et fonctionne en redresseur, la sous-station est dite en mode en traction ; et lorsque le convertisseur est dans l'état actif et fonctionne en onduleur, la sous-station est dite en mode en freinage. Il est à noter que, dans le mode veille, la sous-station est sous tension, mais aucun véhicule ne circule le long de la voie, c'est-à-dire que l'intervalle d'exploitation H, qui sera défini ultérieurement, est infini.

Plus précisément, l'unité 32 est apte à faire basculer la sous-station dans le mode en freinage dès que la tension $U_{ssk}$ mesurée est supérieure à un seuil $U_{C3k}$.

L'unité 32 est également apte à faire basculer la sous-station dans le mode en traction dès que la tension $U_{ssk}$ est inférieure à un seuil $U_{dk}$. Par exemple, le seuil $U_{dk}$ est inférieur ou égal à $U_{Cnom}$.

L'unité 32 permet d'asservir la tension $U_{ssk}$ délivrée ou absorbée par la sous-station $S_k$ au niveau du point $P_k$ sur une consigne $U_{ssc}$. A cet effet, la sous-station $S_k$ comporte un capteur 34 de l'intensité du courant $I_k$ et un capteur 36 de la tension $U_{ssk}$ au niveau du point $P_k$.

La sous-station $S_k$ comporte également un module 40 de réglage de la valeur du seuil $U_{C3k}$ en fonction de la tension $U_{ssk}$ mesurée. Le module 40 est par exemple du type décrit dans la demande EP 1 985 490 A1, son fonctionnement étant présenté dans cette demande.

L'unité 32 et le module 40 sont, par exemple, réalisés sous forme de programmes d'ordinateur dont les instructions sont stockées dans les moyens de mémorisation 33 du calculateur.

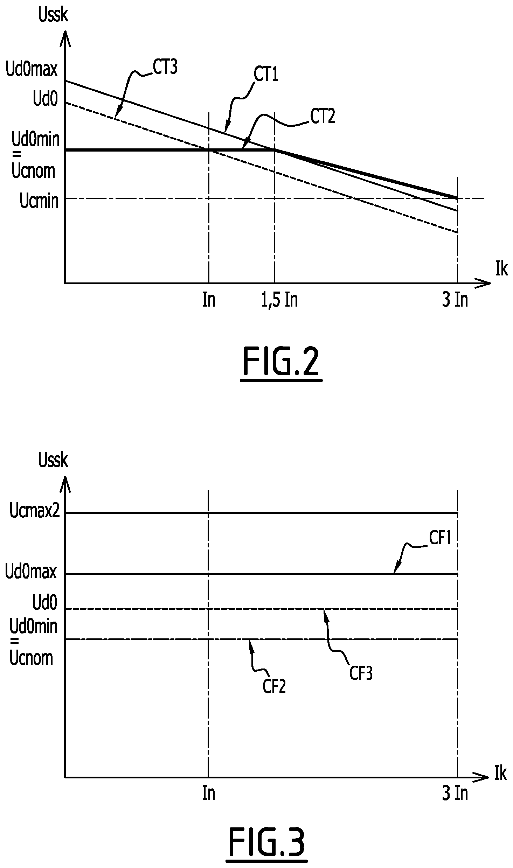

A un instant donné, le point de fonctionnement du convertisseur 30 se trouve, en mode de fonctionnement en traction, le long d'une caractéristique en traction CT reliant la tension $U_{ssk}$ au courant $I_k$ (telles que celles représentées sur la figure 2) et, en mode de fonctionnement en freinage, le long d'une caractéristique en freinage CF reliant la tension $U_{ssk}$ au courant $I_k$ (telles que celles représentées sur la figure 3).

La caractéristique en freinage CF étant une courbe paramétrique fermée de forme complexe (courbe dite de NYQUIST), la figure 3 représente uniquement le domaine d'excursion de la caractéristique en freinage CF. Ce domaine est limité, selon l'une des tensions, par un intervalle caractéristique. Plus cet intervalle est étendu, plus la surface de la caractéristique de freinage CF qui lui est associée est grande, ce qui correspond, en récupération, à une meilleure efficacité de l'énergie de freinage.

A un instant donné, le fonctionnement de la sous-station $S_k$ est déterminé par un couple de caractéristiques traction/freinage CT/CF.

Plus généralement, à un instant donné t, le fonctionnement de la sous-station est déterminé par les valeurs courantes Pc(t) d'une pluralité de paramètres de configuration qui sont utilisées par l'unité 32 pour asservir le convertisseur 30.

Un procédé permettant d'optimiser les valeurs courantes des paramètres de configuration, et en particulier, du couple de caractéristique traction/freinage utilisé par l'unité de commande 32 va maintenant être décrit. Ce procédé d'optimisation a pour but d'améliorer automatiquement l'efficacité énergétique d'une sous-station en fonction de son utilisation effective dans un système particulier, tel qu'il est déployé et exploité.

La sous-station $S_k$ comporte un module 50 de détermination d'un mode de fonctionnement à privilégier.

Le module 50 prend en entrée différents paramètres d'exploitation de la sous-station. Dans le présent mode de réalisation illustratif, ces paramètres d'exploitation sont l'intervalle d'exploitation H, qui est l'inverse de la fréquence moyenne de passage des véhicules en un point de la voie, et la tension alternative Vn délivrée par le réseau 20.

Les valeurs instantanées H(t) et Vn(t) de ces paramètres d'exploitation sont stockées dans un premier espace mémoire 51 des moyens de mémorisation 33.

Les valeurs de ces paramètres sont modifiables, soit par un opérateur, soit automatiquement, au moyen d'un système expert d'exploitation du réseau (ATS pour « Automatic Train Supervision » en anglais). Ainsi, en fonction de la période de la journée, la valeur courante de l'intervalle d'exploitation H est modifiée pour tenir compte par exemple d'une heure de pointe nécessitant l'augmentation du nombre et de la fréquence des véhicules circulant le long de la voie.

La valeur courante de la tension alternative Vn résulte de la mesure instantanée de la tension effectivement délivrée par le réseau 20. Des variations de $\pm$ 10 % autour de la valeur nominale de la tension alternative Vn sont classiques et prévues par la norme EN 50160.

Le module 50 délivre en sortie une valeur instantanée, M(t), d'une variable « mode de fonctionnement à privilégier ». Cette variable prend la valeur +1 lorsque la mode à privilégier correspond au mode de fonctionnement en traction, la valeur -1 lorsque le mode à privilégier correspond au mode de fonctionnement en freinage, et la valeur 0 lorsque le mode de fonctionnement à intégrer est "rentré", c'est-à-dire qu'aucun mode de fonctionnement parmi le mode de fonctionnement en traction et le mode de fonctionnement en freinage n'est à privilégier, et la valeur -2 lorsque le mode à privilégier correspond au mode en veille de la sous-station.

S'il est déterminé que le mode de fonctionnement à privilégier correspond au mode de fonctionnement en traction, les paramètres de configuration de la sous-station $S_k$ sont optimisés de manière à permettre une meilleure efficacité énergétique lorsque la sous-station se trouve effectivement dans le mode de fonctionnement en traction, au détriment éventuellement, de l'efficacité énergétique lorsque la sous-station se trouve en mode de fonctionnement en freinage. En particulier, la caractéristique en traction utilisée par l'unité de commande 32 est optimisée de manière à se rapprocher de la courbe CT1 sur la figure 2. Les caractéristiques en traction et en freinage étant corrélées l'une à l'autre, lorsque la caractéristique en traction utilisé se rapproche de la caractéristique CT1, la caractéristique en freinage correspondante se rapproche de la caractéristique en freinage CF1 de la figure 3 qui, du fait de son intervalle caractéristique, présente une efficacité en récupération réduite.

S'il est déterminé que le mode de fonctionnement à privilégier correspond au mode de fonctionnement en freinage, les paramètres de configuration de la sous-station sont optimisés de manière à permettre une meilleure efficacité énergétique lorsque la sous-station se trouve effectivement dans le mode de fonctionnement en freinage, au détriment éventuellement de l'efficacité énergétique lorsque la sous-station se trouve dans le mode de fonctionnement en traction. En particulier, la caractéristique en freinage utilisée par l'unité de commande 32 est optimisée de manière à se rapprocher de la courbe CF2 de la figure 3. Parallèlement, la caractéristique en traction utilisée se rapproche de la courbe CT2 de la figure 2 qui présente une efficacité énergétique en traction réduite.

S'il est déterminé que le mode de fonctionnement à privilégier est neutre, les paramètres de configuration de la sous-station $S_k$ sont optimisés de manière à permettre une bonne efficacité énergétique aussi bien lorsque la sous-station se trouve dans le mode de fonctionnement en traction, que lorsqu'elle se trouve dans le mode de fonctionnement en freinage. Un réglage moyen des caractéristiques en traction et en freinage sera adopté. La valeur du mode de fonctionnement à privilégier est « neutre ».

Enfin, s'il est déterminé que le mode de fonctionnement à privilégier est le mode en veille, les paramètres de configuration sans charge de traction sont optimisés pour améliorer l'efficacité énergétique de la sous-station.

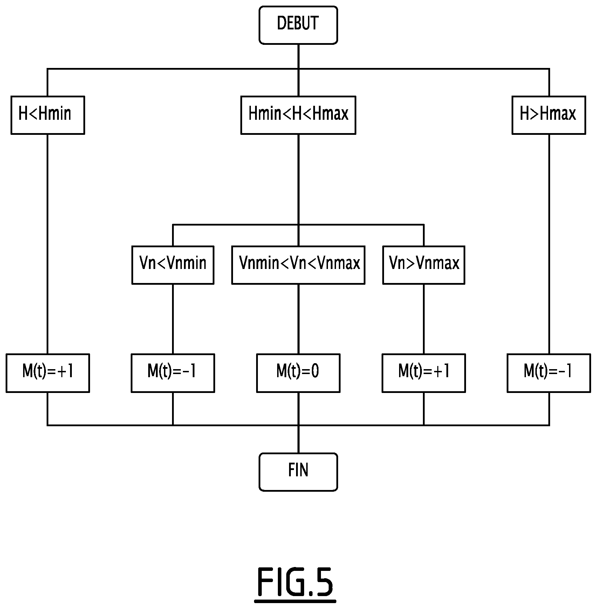

Pour la détermination de la valeur instantanée M(t) du mode de fonctionnement à privilégier, le module 50 met en oeuvre un algorithme prenant la forme d'un arbre de décision qui est représenté sur la figure 5 et qui sera décrit ultérieurement, en relation avec les étapes correspondantes du procédé d'optimisation présenté ci-après.

La sous-station $S_k$ comporte un module 54 de comparaison, propre à comparer la valeur instantanée M(t) du mode de fonctionnement à privilégier, délivrée en sortie du module 50, et la valeur courante Mc de cette variable qui est mémorisée, à l'instant considéré, dans le premier espace mémoire 51.

Uniquement lorsque la valeur instantanée M(t) est différente de la valeur courante Mc, le module 54 enregistre la valeur instantanée dans le premier espace mémoire 51 en tant que valeur courante du mode de fonctionnement à privilégier.

La sous-station $S_k$ comporte un moyen de lecture/écriture 56 propre à lire, dans les moyens de mémorisation 33, des valeurs des paramètres de configuration associées à une valeur particulière du mode de fonctionnement à privilégier, afin de les écrire dans un second espace mémoire 52 en tant que valeurs courantes Pc(t) des paramètres de configuration. L'unité 32 utilise les valeurs courantes Pc(t) pour piloter le convertisseur 30.

De manière inverse, le moyen de lecture/écriture 56 est propre à lire, dans le second espace mémoire 52, les valeurs courantes Pc(t) des paramètres de configuration pour les écrire dans les moyens de mémorisation 33 en les y associant à un mode de fonctionnement à privilégier correspondant à la valeur courante Mc du mode de fonctionnement à privilégier.

Le moyen de lecture/écriture 56 permet ainsi, lors d'un changement de la valeur du mode de fonctionnement à privilégier, de sauvegarder les valeurs courantes des paramètres de configuration associées au mode à privilégier que l'on quitte, et à charger, en tant que valeurs courantes, les valeurs des paramètres de configuration associées, dans les moyens de mémorisation 33, au mode à privilégier que l'on gagne.

La sous-station $S_k$ comporte un module 62 de calcul. Celui-ci est propre à calculer, à partir des valeurs instantanées de grandeurs de fonctionnement mesurées Gm(t), telles que Uss, Ik, etc., et des valeurs courantes Pc(t) des paramètres de configuration de la sous-station, tels que Uc3k, Ud, etc., des valeurs instantanées Gc(t) de grandeurs de fonctionnement calculées, telles que :

- l'énergie de traction, Et ;
- l'énergie de freinage Ef ;
- le facteur de puissance, Cos $\varphi$ ;
- la distorsion harmonique du courant, THDI ;
- la puissance crête, $\eta$ ; et,
- la puissance moyenne P0, sur une base de 10 ou 15 mn, selon la référence contractuelle des fournisseurs d'énergie.

Les valeurs instantanées G(t) des grandeurs de fonctionnement, mesurées et calculées, sont stockées dans un troisième espace mémoire 53, prédéfini et partagé, des moyens de mémorisation 33. Elles y sont mémorisées avec un attribut temporel indiquant l'instant de mesure ou de calcul.

La sous-station $S_k$ comporte un module 64 de valeur moyenne, propre à calculer la valeur moyenne $\hat{G}(t)$ des N dernières valeurs instantanées G(t) des grandeurs de fonctionnement. De préférence, N est choisi égal à 10.

La sous-station $S_k$ comporte un module 72 de sélection d'une fonction d'optimisation F. Une telle fonction constitue un critère quantitatif dépendant des grandeurs de fonctionnement caractérisant le point de fonctionnement de la sous-station et dont la maximisation permet de déterminer le meilleur point de fonctionnement de la sous-station.

Une fonction d'optimisation F est sélectionnée en fonction de la valeur courante du mode de fonctionnement à privilégier, Mc, contenue dans le premier espace mémoire 51.

Lorsque le mode de fonctionnement à privilégier vaut +1, la fonction d'optimisation sélectionnée par l'unité 72 est une fonction d'optimisation en traction.

Lorsque le mode de fonctionnement à privilégier vaut -1, la fonction d'optimisation sélectionnée par l'unité 72 est une fonction d'optimisation en freinage.

Lorsque le mode de fonctionnement à privilégier vaut 0, la fonction d'optimisation sélectionnée par l'unité 72 est une fonction d'optimisation neutre.

Lorsque le mode de fonctionnement à privilégier vaut -2, la fonction d'optimisation sélectionnée par l'unité 72 est une fonction d'optimisation en veille.

Une fonction d'optimisation résulte de la sommation pondérée d'une pluralité de fonctions d'optimisation élémentaires, chaque fonction d'optimisation élémentaire représentant un critère élémentaire portant sur une grandeur de fonctionnement particulière.

La fonction d'optimisation en traction FT comporte par exemple les fonctions élémentaires suivantes qui ont été ordonnées selon le poids dont elles sont affectées dans la fonction d'optimisation en traction, du poids le plus élevé, vers le poids le plus faible :

- une première fonction élémentaire sur la tension Ussk, traduisant que l'on souhaite augmenter cette tension ;
- une seconde fonction élémentaire sur l'énergie de traction Et, traduisant que l'on souhaite réduire cette énergie ;
- une troisième fonction élémentaire sur la distorsion harmonique du courant THDI, traduisant que l'on souhaite garder cette distorsion en dessous d'un seuil, par exemple de 5 % ;
- une quatrième fonction élémentaire sur la puissance crête $\eta$, traduisant que l'on souhaite réduire la puissance instantanée ; et,
- une cinquième fonction élémentaire sur le facteur de puissance $\cos\varphi$, traduisant que l'on souhaite garder ce facteur proche de l'unité.

La fonction d'optimisation en freinage, *FF*, comporte par exemple les fonctions élémentaires suivantes, qui ont été ordonnées selon le poids dont elles sont affectées dans la fonction d'optimisation en freinage, du poids le plus élevé, vers le poids le plus faible :

- une première fonction élémentaire sur l'énergie de freinage Ef, traduisant que l'on souhaite augmenter cette énergie ;
- une seconde fonction élémentaire sur la distorsion harmonique du courant THDI, traduisant que l'on souhaite garder cette distorsion en dessous d'un seuil, par exemple de 5 % ;
- une troisième fonction élémentaire sur le facteur de puissance $\cos\varphi$, traduisant que l'on souhaite garder ce facteur proche de l'unité ; et,
- une quatrième fonction élémentaire sur l'efficacité $\eta$, traduisant que l'on souhaite augmenter cette efficacité.

La fonction d'optimisation neutre, FN, comporte par exemple les fonctions élémentaires suivantes, qui sont affectées, dans la fonction d'optimisation neutre, d'un poids respectif à préciser en fonction de l'application :

- soutien de la tension ligne,

- optimisation énergétique nette globale (Et -Ef),
- Facteur de puissance, et
- Contenu harmonique global.

Enfin, la fonction d'optimisation en mode Veille, FV, comporte les fonctions élémentaires suivantes :

- le contrôle et la régulation des auxiliaires de refroidissement de la sous-station, en mode économique,
- la mise en sommeil des fonctions qui ne sont pas nécessaires à la surveillance et à la sécurité de la sous-station et des équipements périphériques (fonction de délestage de l'appel de puissance, dénommée « Load shedding » en anglais).

La sous-station $S_k$ comporte un module 74 d'évaluation propre à déterminer la valeur de la fonction d'optimisation sélectionnée, à partir des valeurs des grandeurs de fonctionnement qui lui sont appliquées en entrée. L'unité 74 évalue ainsi la valeur instantanée F(t) de la fonction d'optimisation sélectionnée à partir des valeurs moyennes $\hat{G}(t)$ des grandeurs de fonctionnement. L'unité 74 évalue également la valeur modifiée ∆F(t) de la fonction d'optimisation sélectionnée, à partir des valeurs modifiées ∆$G(t)$ des grandeurs de fonctionnement. La manière d'obtenir ces valeurs modifiées est présentée ci-après.

La sous-station $S_k$ comporte un module 76 de variation conçu pour calculer des valeurs modifiées ∆G(t) des grandeurs de fonctionnement à partir des valeurs moyennes $\hat{G}(t)$ des grandeurs de fonctionnement qui lui sont appliquées en entrée. Les valeurs modifiées sont calculées pour rester « proches » des valeurs moyennes d'entrée. L'unité 76 utilise un critère de distance dans l'espace des n-uplets dont les composantes correspondent aux grandeurs de fonctionnement. Par exemple, l'unité 76 détermine les valeurs modifiées ∆$G(t)$ par un tirage aléatoire dans un hyper volume autour des valeurs moyennes $\hat{G}(t)$ des grandeurs de fonctionnement.

La sous-station $S_k$ comporte un module 78 de maximisation propre à sélectionner, en tant que valeurs maximisées $G_{max}(t)$ des grandeurs de fonctionnement les valeurs modifiées ∆G(t) qui conduisent à une valeur de la fonction d'optimisation F supérieure à la valeur instantanée de cette fonction F(t).

La sous-station $S_k$ comporte un module 80 de calcul inverse propre à déterminer, à partir des valeurs maximisées $G_{max}(t)$ des grandeurs de fonctionnement, des valeurs optimisées Po(t) des paramètres de configuration. L'unité 80 est propre à écrire ces valeurs optimisées dans le second espace mémoire 52 en tant que valeurs courantes Pc(t) des paramètres de configuration.

La sous-station $S_k$ comporte également, pour la gestion d'un compteur entier T, représentant les itérations du procédé présenté ci-après, des moyens pour initialiser à la valeur nulle cet entier, pour l'incrémenter d'une unité et pour les comparer à une valeur de référence T0, par exemple égale à 10.

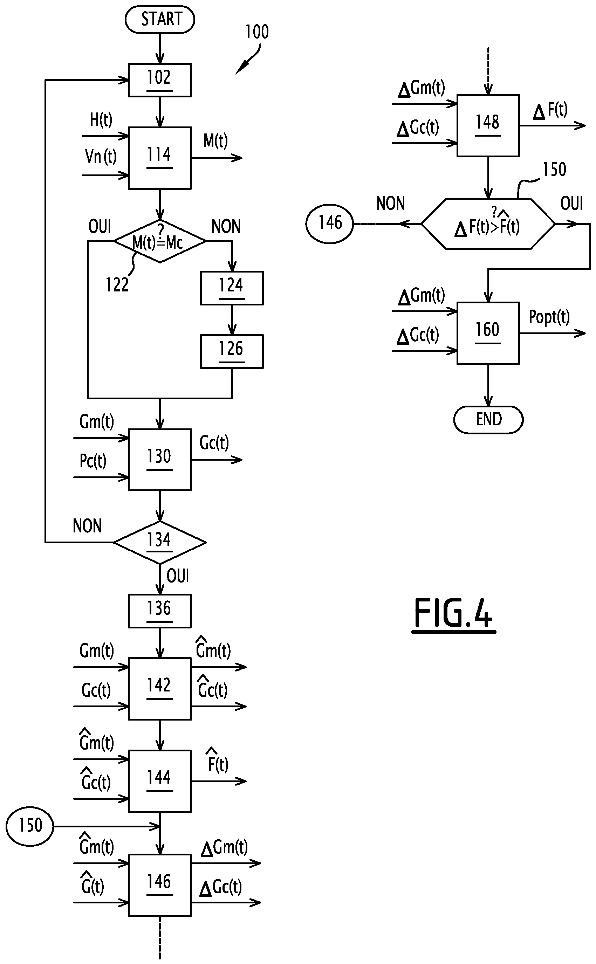

Le procédé d'optimisation du fonctionnement de la sous-station $S_k$ va maintenant être décrit en détail en référence avec les figures 4 et 5.

Le procédé 100 est exécuté périodiquement, par exemple toutes les minutes.

A chaque exécution, un compteur T est incrémenté d'une unité (étape d'incrémentation 102).

L'exécution du procédé 100 débute par une étape de détermination de la valeur courante Mc du mode de fonctionnement à privilégier.

Au cours d'une étape de décision 114, le module 50 est appelé. Il lit, dans le premier espace mémoire 51, la valeur instantanée de l'intervalle d'exploitation H et celle de la tension alternative Vn. Puis, le module 50 met en oeuvre d'algorithme de décision suivant illustré sur la figure 5 :

- Si l'intervalle d'exploitation H est inférieur à un premier seuil bas Hmin, par exemple de 3 mn, le mode à privilégier prend la valeur +1 ce qui correspond au fonctionnement en traction. C'est le cas où le trafic sur la voie est dense (forte réceptivité de la ligne), c'est-à-dire à une heure de pointe de l'exploitation de la voie. On décide alors de privilégier la qualité de l'alimentation en puissance électrique des véhicules en circulation.
- Si l'intervalle d'exploitation H est supérieur à un premier seuil haut Hmax, par exemple de 1 h, le mode à privilégier prend la valeur -1 ce qui correspond au fonctionnement en freinage. C'est le cas où l'énergie de freinage générée sur la ligne ne peut qu'être renvoyée vers le réseau 20, puisqu'il est peu probable qu'un autre train circulant sur la voie puisse récupérer cette énergie (faible réceptivité de la ligne).

- Si l'intervalle d'exploitation H est supérieur au premier seuil bas Hmin et inférieur au premier seuil haut Hmax, le module 50 prend en compte la valeur courante de la tension alternative du réseau 20.
- Si la tension alternative Vn est inférieure à un second seuil bas Vnmin, par exemple de 1000 V, le mode à privilégier prend la valeur -1 ce qui correspond au fonctionnement en freinage. Ceci correspond aux heures creuses d'un système pour un réseau du type transport urbain, où la réceptivité de la ligne est faible et où la régénération de l'énergie de freinage par le sous-station doit être privilégiée.
- Si la tension alternative Vn est supérieure à un seuil haut Vnmax, par exemple de 1500 V, le mode à privilégier prend la valeur +1 ce qui correspond au fonctionnement en traction. Ceci correspond à un système pour un réseau du type grandes lignes, où la régénération de l'énergie de freinage des trains est secondaire et où la fonction énergie de traction doit être privilégiée.
- Enfin, si la tension alternative Vn est supérieure au second seuil bas Vnmin et inférieure au second seuil haut Vnmax, le mode à privilégier prend la valeur 0 ce qui correspond au mode neutre où aucun des modes de fonctionnement en traction ou en freinage n'est à privilégier. Ceci correspond à un système pour un réseau du type suburbain à base d'automotrices ou de trains tractés par locomotives, où le choix des contraintes assignées doit être laissé à l'initiative de l'exploitant en fonction des caractéristiques d'alimentation des lignes.

La valeur délivrée par le module 50 est la valeur instantanée M(t) du mode de fonctionnement à privilégier.

La détermination du mode de fonctionnement à privilégier se poursuit par une mise à jour de la valeur courante Mc à partir de la valeur instantanée M(t). Si la valeur instantanée M(t) est différente de la valeur courante Mc, le module 54 enregistre la valeur instantanée dans le premier espace mémoire 51 en tant que nouvelle valeur courante du mode de fonctionnement à privilégier. Ceci est effectué, au cours d'une étape de comparaison 122, par la comparaison de la valeur courante Mc du mode de fonctionnement à privilégier, mémorisée dans le premier espace mémoire 51, avec la valeur instantanée M(t).

Si la valeur instantanée du mode de fonctionnement à privilégier est différente de sa valeur courante, les étapes suivantes ont lieu :

- au cours d'une étape 124, le moyen de lecture/écriture 56 sauvegarde les valeurs courantes P(t) des paramètres de configuration présentes dans le second espace mémoire 52, dans les moyens de mémorisation en les y associant à la valeur courante Mc du mode de fonctionnement à privilégier, puis lit, dans les moyens de mémorisation, les valeurs des paramètres de configuration qui sont associées à la valeur instantanée M(t) du mode de fonctionnement à privilégier, pour les placer dans le second espace mémoire 52, en tant que valeurs courantes P(t) des paramètres de configuration. A partir de cet instant, l'unité de commande 32 accède aux valeurs des paramètres de configuration stockées dans ce second espace mémoire, et utilise, en particulier, un couple de caractéristique traction/freinage associé à la valeur courante M(t) du mode à privilégier ; puis le module 56 enregistre la valeur instantanée M(t) du mode à privilégier en tant que valeur courante Mc dans le premier espace mémoire 51.

- au cours d'une étape 126, le module de sélection 72 sélectionne, dans les moyens de mémorisation, la fonction d'optimisation F correspondant à la nouvelle valeur courante Mc du mode à privilégier et la charge dans le module d'évaluation 74.

Après ces étapes, ou si la valeur courante du mode de fonctionnement à privilégier est inchangée, le procédé effectue une étape de calcul 130. Lors de cette étape, le module de calcul 62 est appelé pour calculer les valeurs instantanées $Gc(t)$ des grandeurs de fonctionnement calculées, à partir des valeurs courantes P(t) des paramètres de configuration et des valeurs instantanées $Gm(t)$ des grandeurs de fonctionnement mesurées par les différents capteurs.

Les valeurs instantanées $G(t)$ des grandeurs de fonctionnement, mesurées et calculées, sont enregistrées dans un troisième espace mémoire 53 des moyens de mémorisation, avec un attribut temporel, correspondant à la valeur courante du compteur T.

Au cours d'une étape de comparaison 134, la valeur courante de T est comparée à un entier de référence T0, par exemple égal à 10.

Si T est inférieure à 10 le procédé reprend à l'étape 102.

Si T est égale à 10, après la réinitialisation du compteur T à la valeur nulle (étape 136), le procédé se poursuit par une phase d'optimisation des paramètres de configuration.

Au cours d'une étape de calcul 142, le module 64 est appelé pour calculer la valeur moyenne $\hat{G}(t)$ des grandeurs de fonctionnement, à partir des dix dernières valeurs instantanées $G(t)$ des grandeurs de fonctionnement contenues dans le troisième espace mémoire 53.

Au cours d'une étape d'évaluation 144, le module 74 d'évaluation est exécuté pour calculer la valeur instantanée F(t) de la fonction d'optimisation F sélectionnée par le module 72. Ce calcul utilise les valeurs moyennes $\hat{G}(t)$ des grandeurs de fonctionnement.

Au cours d'une étape de variation 146, le module de variation 76 est exécuté de manière à déterminer, à partir des valeurs moyennes $\hat{G}(t)$ des grandeurs de fonctionnement, des valeurs modifiées $\Delta G(t)$ des grandeurs de fonctionnement.

Au cours d'une étape de calcul 148, le module 74 est à nouveau exécuté pour calculer la valeur modifiée $\Delta F(t)$ de la fonction d'optimisation sélectionnée. Ce calcul utilise maintenant les valeurs modifiées $\Delta G(t)$ des grandeurs de fonctionnement.

Au cours d'une étape de maximisation 150, la valeur modifiée $\Delta F(t)$ de la fonction d'optimisation est comparée à sa valeur instantanée F(t) en utilisant le module de maximisation 78.

Si la valeur modifiée $\Delta F(t)$ est inférieure à la valeur instantanée F(t), le procédé revient à l'étape 146 afin de déterminer un autre jeu de valeurs modifiées $\Delta G(t)$ des grandeurs de fonctionnement.

Si la valeur modifiée $\Delta F(t)$ est supérieure à la valeur instantanée F(t) de la fonction de contrainte, le procédé passe à une étape 160 de calcul inverse.

Au cours de ce calcul 160, le module de calcul inverse 80 est appelé pour, à partir des valeurs modifiées $\Delta G(t)$ des grandeurs de fonctionnement qui maximisent la fonction d'optimisation F, déterminer les valeurs optimisées Popt(t) des paramètres de configuration.

Les valeurs des paramètres de configuration ainsi optimisées sont stockées dans le second espace de mémoire 52 en tant que valeurs courantes P(t) des paramètres de configuration. En particulier, l'unité de commande 32 utilise les valeurs mises à jours des paramètres de configuration pour commander le convertisseur 30.

A l'issue de ce calcul 160, le procédé se termine.

Selon le procédé défini ci-dessus, la sous-station Sk détermine dynamiquement le mode de fonctionnement à privilégier à l'instant courant et optimise les paramètres de configuration associés à ce mode de fonctionnement.

Dans le mode de réalisation décrit, la détermination du mode de fonctionnement à privilégier est réalisée à partir des paramètres d'exploitation H et Vn.

En variante, à la place de la tension alternative Vn, le paramètre d'exploitation D de distance entre deux sous-stations consécutives est utilisé dans l'arbre de décision de la manière suivante :

- Si l'intervalle d'exploitation H est supérieur au premier seuil bas Hmin et inférieur au premier seuil haut Hmax, le module 50 prend en compte la valeur courante de la distance D entre deux sous-stations voisines.
- Si la distance D est inférieure à un second seuil bas Dmin, par exemple de 2000 m, le mode à privilégier prend la valeur -1 ce qui correspond au fonctionnement en freinage.
- Si la distance D est supérieure à un seuil haut Dmax, par exemple de 10 000 m, le mode à privilégier prend la valeur +1 ce qui correspond au fonctionnement en traction.
- Enfin, si la distance D est supérieure au second seuil bas Dmin et inférieure au second seuil haut Dmax, le mode à privilégier prend la valeur 0 ce qui correspond au mode neutre où aucun des modes de fonctionnement en traction ou en freinage n'est à privilégier.

Conformément à une autre variante, la détermination du mode de fonctionnement à privilégier prend en compte les valeurs courantes des paramètres de configuration des sous-stations adjacentes à la sous-station Sk considérée, et, en particulier, les valeurs courantes de leurs modes de fonctionnement à privilégier respectifs, pour une synchronisation global du réseau.

L'optimisation des paramètres de configuration du mode de fonctionnement correspondant au mode à privilégier, s'effectue par apprentissage, à partir de l'historique de l'utilisation réelle de la sous-station une fois le système déployé et exploité.

Dans le mode de réalisation illustratif, une profondeur de 10 ou 15 mn, correspondant à la fenêtre de mesure employée par les fournisseurs d'énergie est utilisée, mais d'autres manières de tenir compte de l'histoire du fonctionnement de la sous-station sont envisageables.

L'optimisation utilise une fonction de contrainte.

Dans le mode de réalisation présenté, le poids affectant les différentes fonctions élémentaires de la fonction d'optimisation sont fixes. Le nombre et la nature des fonctions élémentaires utilisés sont également fixes.

En variante, ces poids résultent de la mise en oeuvre d'algorithme d'estimation par exemple du type réseau de neurones.

En variante, les fonctions élémentaires introduites dans la fonction d'optimisation résultent d'un algorithme d'adaptation par exemple du type algorithme génétique.

Pour l'optimisation proprement dite, le mode de réalisation illustratif prévoit un tirage aléatoire au voisinage des valeurs courantes des grandeurs de fonctionnement.

En variante, les grandeurs de fonctionnement sont modifiées sur la base d'un calcul des variations de la fonction de contrainte.

## Revendications

1. Procédé d'optimisation du fonctionnement d'une sous-station réversible de traction (Sk) d'un système (4) d'alimentation en puissance électrique de véhicules ferroviaires, ledit système étant situé à l'interface entre un réseau (20) de fourniture en courant alternatif et une ligne (6) d'alimentation en courant continu, disposée le long d'une voie et à laquelle peut être raccordé électriquement un véhicule ferroviaire (46), ladite sous-station réversible étant commandable en mode de fonctionnement en traction pour transférer, à la ligne, une énergie électrique délivrée par le réseau ; et en mode de fonctionnement en freinage pour transférer, au réseau, une énergie électrique excédentaire de régénération captée sur la ligne, **caractérisé en ce que** le procédé comporte :

   - la détermination (114, 122, 124, 126) d'une valeur courante (Mc) d'un mode de fonctionnement à privilégier à partir de valeurs d'une pluralité de paramètres d'exploitation (H, Vn) de la sous-station (Sk) ;
   - la maximisation (150) d'au moins une fonction d'optimisation (F) qui dépend de la valeur courante (Mc) du mode de fonctionnement à privilégier, en fonction de valeurs instantanées (G(t)) d'une pluralité de grandeurs de fonctionnement de la sous-station (Sk), de manière à obtenir des valeurs maximisées (Gmax(t)) des grandeurs de fonctionnement ;
   - le calcul (160) de valeurs optimisées (Popt(t)) d'une pluralité de paramètres de configuration de la sous-station (Sk) à partir des valeurs maximisées (Gmax(t)) des grandeurs de fonctionnement, lesdites valeurs optimisées (Popt(t)) desdits paramètres de configuration étant sauvegardées en tant que valeurs courantes des paramètres de configuration (Pc(t)) pour commander la sous-station (Sk),

la pluralité de grandeurs de fonctionnement étant sélectionnée parmi :

- l'énergie de traction, Et ;
- l'énergie de freinage Ef ;
- le facteur de puissance, Cos $\varphi$ ;
- la distorsion harmonique du courant, THDI ;
- la puissance crête, $\eta$ ; et,
- la puissance moyenne P0, sur une base de 10 ou 15 mn, selon la référence contractuelle des fournisseurs d'énergie.

2. Procédé selon la revendication 1, **caractérisé en ce que** le mode de fonctionnement à privilégier prend une valeur courante (Mc) dans l'ensemble comportant la valeur +1 lorsque la mode à privilégier correspond au mode de fonctionnement en traction, la valeur -1 lorsque le mode à privilégier correspond au mode de fonctionnement en freinage, éventuellement la valeur 0 lorsque aucun mode de fonctionnement parmi le mode de fonctionnement en traction et le mode de fonctionnement en freinage n'est à privilégier, et éventuellement encore la valeur -2 lorsque le mode à privilégier est un mode en veille, mode dans lequel aucune énergie n'est échangée entre le réseau et la ligne, la sous-station étant alors commandée pour minimiser sa consommation électrique.

3. Procédé selon la revendication 2, **caractérisé en ce que** la détermination de la valeur courante (Mc) d'un mode de fonctionnement comprend une étape de décision (114) qui met en oeuvre un algorithme du type arbre de décision pour déterminer une valeur instantanée (M(t)) à partir des valeurs instantanées de la pluralité de paramètres d'exploitation (H, Vn) de la sous-station (Sk) et la mise à jour (122, 124, 126) de la valeur courante (Mc) avec la valeur instantanée (M(t)).

4. Procédé selon la revendication 3, **caractérisé en ce que** ledit algorithme du type arbre de décision prend en entrée les valeurs instantanées des paramètres d'exploitation parmi un intervalle d'exploitation (H) des véhicules ferroviaires sur ladite voie, une tension alternative (Vn) délivrée par le réseau et, lorsque le système comporte au moins deux sous-stations réversibles, la distance (D) entre lesdites au moins deux sous-stations.

5. Procédé selon l'une quelconque des revendications précédentes, **caractérisé en ce que** le procédé comporte une étape (126) de sélection de la fonction d'optimisation (F) à maximiser, en fonction de la valeur courante (Mc) du mode de fonctionnement à privilégier.

6. Procédé selon la revendication 5, **caractérisé en ce que** la fonction d'optimisation (F) est une somme pondérée d'une pluralité de fonctions élémentaires.

7. Procédé selon la revendication 6, **caractérisé en ce que** l'étape (126) de sélection fait intervenir un algorithme d'estimation des poids servant à pondérer chaque fonction élémentaire dans la fonction d'optimisation.

8. Procédé selon la revendication 6 ou la revendication 7, **caractérisé en ce que** l'étape (126) de sélection fait intervenir un algorithme d'adaptation servant à faire évoluer au cours de l'utilisation de ladite sous-station, les fonctions élémentaires entrant dans la définition de la fonction d'optimisation.

9. Procédé selon l'une quelconque des revendications précédentes, **caractérisé en ce que** la maximisation (150) comporte la détermination (144) de la valeur instantanée (F(t)) de la fonction d'optimisation sélectionnée en fonction des valeurs ($\hat{G}(t)$) des grandeurs de fonctionnement, la modification (146) des valeurs instantanées ($\Delta G(t)$) des grandeurs de fonctionnement, la détermination (148) de la valeur modifiée ($\Delta F(t)$) de la fonction d'optimisation en fonction des valeurs modifiées des grandeurs de fonctionnement, la comparaison (150) de la valeur modifiée et de la valeur instantanée de la fonction de contrainte, et, lorsque la valeur modifiée est supérieure à la valeur instantanée, affecter les valeurs modifiées en tant que valeurs maximisées (Gmax(t)) des grandeurs de fonctionnement.

10. Support d'enregistrement d'informations, **caractérisé en ce qu'**il comporte des instructions pour l'exécution d'un procédé d'optimisation conforme à l'une quelconque des revendications 1 à 9, lorsque les instructions sont exécutées par un calculateur électronique.

11. Sous-station réversible de traction d'un système (4) d'alimentation en puissance électrique de véhicules ferroviaires, ledit système étant situé à l'interface entre un réseau (20) de fourniture en courant alternatif et une ligne (6) d'alimentation en courant continu disposée le long d'une voie et à laquelle un véhicule ferroviaire (46) peut être raccordé électriquement, ladite sous-station réversible étant commandable en mode de fonctionnement en freinage pour transférer, au réseau, une énergie électrique captée sur la ligne ; et en mode de fonctionnement en traction pour transférer, à la ligne, une énergie électrique délivrée par le réseau, la sous-station comportant un convertisseur (30) et un calculateur (29) pilotant le convertisseur, **caractérisée en ce que** le calculateur est programmé pour exécuter un procédé d'optimisation conforme à l'une quelconque des revendications 1 à 9.

12. Système (4) d'alimentation en puissance électrique de véhicules ferroviaires, ledit système étant situé à l'interface entre un réseau (20) de fourniture en courant alternatif et une ligne (6) d'alimentation en courant continu disposée le long d'une voie et à laquelle un véhicule ferroviaire (46) peut être raccordé électriquement, ledit système comportant au moins une sous-station réversible de traction commandée en mode de fonctionnement en freinage pour transférer, au réseau, une énergie électrique captée sur la ligne ; et en mode de fonctionnement en traction pour transférer à la ligne une énergie électrique délivrée par le réseau, **caractérisé en ce que** ladite sous-station est conforme à la sous-station (Sk) de la revendication 11.

**Patentansprüche**

1. Verfahren zur Optimierung des Betriebs eines umkehrbaren Bahnunterwerks (Sk) eines Systems (4) zur Versorgung von Schienenfahrzeugen mit elektrischer Leistung, wobei das System an einer Schnittstelle zwischen einem Netz (20) zum Liefern von Wechselstrom und einer Leitung (6) zur Versorgung mit Gleichstrom, welche entlang eines Gleises angeordnet ist und mit welchem ein Schienenfahrzeug (46) elektrisch verbindbar ist, angeordnet ist, wobei das umkehrbare Bahnunterwerk in einem Antriebsbetriebsmodus zum Übertragen einer elektrischen Energie, welche mittels des Netzes geliefert wird, an die Leitung und in einem Bremsbetriebsmodus zum Übertragen einer überschüssigen elektrischen Rückgewinnungsenergie, welche über die Leitung erlangt wird, an das Netz steuerbar ist, **gekennzeichnet dadurch, dass** das Verfahren aufweist:

    - das Ermitteln (114, 122, 124, 126) eines aktuellen Werts (Mc) eines zu bevorzugenden Betriebsmodus aus den Werten von einer Mehrzahl von Betriebsparametern (H, Vn) des Unterwerks (Sk),
    - das Maximieren (150) von mindestens einer Optimierungsfunktion (F), welche von dem aktuellen Wert (Mc) des zu bevorzugenden Betriebsmodus abhängt, in Abhängigkeit von Momentanwerten (G(t)) einer Mehrzahl von Betriebsgrößen des Unterwerks (Sk) derart, dass maximierte Werte (Gmax(t)) der Betriebsgrößen erlangt werden,
    - das Berechnen (160) von optimierten Werten (Pop(t)) einer Mehrzahl von Konfigurationsparametern des Unterwerks (Sk) aus den maximierten Werten (Gmax(t)) der Betriebsgrößen, wobei die optimierten Werte (Pop(t)) der Konfigurationsparameter als aktuelle Werte der Konfigurationsparameter (Pc(t)) zum Steuern des Unterwerks (Sk) gespeichert werden,

wobei die Mehrzahl von Betriebsgrößen ausgewählt ist aus:

    - der Antriebsenergie Et,
    - der Bremsenergie Ef,
    - dem Leistungsfaktor cos φ,
    - der harmonischen Verzerrung des Stroms THDI,
    - der Spitzenleistung η, und
    - der mittleren Leistung P0, auf einer Basis von 10 oder 15 Minuten, gemäß der Vertragsreferenz der Energieversorger.

2. Verfahren gemäß dem Anspruch 1, **gekennzeichnet dadurch, dass** der zu bevorzugende Betriebsmodus einen aktuellen Wert (Mc) in der Menge annimmt, welche aufweist den Wert +1, wenn der zu bevorzugende Modus dem Antriebsbetriebsmodus entspricht, den Wert -1, wenn der zu bevorzugende Modus dem Bremsbetriebsmodus entspricht, gegebenenfalls den Wert 0, wenn kein Betriebsmodus von dem Antriebsbetriebsmodus und dem Bremsbetriebsmodus zu bevorzugen ist, und weiter gegebenenfalls den Wert -2, wenn der zu bevorzugende Modus ein Ruhemodus, in welchem Modus keine Energie zwischen dem Netz und der Leitung ausgetauscht wird, wobei das Unterwerk dann derart gesteuert wird, seinen elektrischen Verbrauch zu minimieren, ist,.

3. Verfahren gemäß dem Anspruch 2, **gekennzeichnet dadurch, dass** das Ermitteln des aktuellen Werts (Mc) eines Betriebsmodus aufweist einen Schritt des Entscheidens (114), welcher einen Algorithmus vom Entscheidungsbaum-Typ zum Bestimmen eines Momentanwerts (M(t)) aus den Momentanwerten der Mehrzahl von Betriebsparametern (H, Vn) des Unterwerks (Sk) und zum Aktualisieren (122, 124, 126) des aktuellen Werts (Mc) mit dem Momentanwert (M(t)) umsetzt.

4. Verfahren gemäß dem Anspruch 3, **gekennzeichnet dadurch, dass** der Algorithmus vom Entscheidungsbaum-Typ am Eingang die Momentanwerte der Betriebsparameter in einem Betriebsintervall (H) der Schienenfahrzeuge auf dem Gleis, eine Wechselspannung (Vn), welche durch das Netz geliefert wird, und, wenn das System mindestens zwei umkehrbare Unterwerke aufweist, die Distanz (D) zwischen diesen mindestens zwei Unterwerken nimmt.

5. Verfahren gemäß irgendeinem der vorhergehenden Ansprüche, **dadurch gekennzeichnet, dass** das Verfahren aufweist einen Schritt (126) des Auswählens der zu maximierenden Optimierungsfunktion (F) in Abhängigkeit von dem aktuellen Wert (Mc) des zu bevorzugenden Betriebsmodus.

6. Verfahren gemäß dem Anspruch 5, **dadurch gekennzeichnet, dass** die Optimierungsfunktion (F) eine gewichtete Summe aus einer Mehrzahl von Elementarfunktionen ist.

7. Verfahren gemäß dem Anspruch 6, **dadurch gekennzeichnet, dass** der Schritt (126) des Auswählens einen Algorithmus zum Ermitteln der Gewichte, welche zum Gewichten von jeder Elementarfunktion in der Optimierungsfunktion dienen, einsetzt.

8. Verfahren gemäß dem Anspruch 6 oder dem Anspruch 7, **dadurch gekennzeichnet, dass** der Schritt (126) des Auswählens einen Anpassungsalgorithmus einsetzt, welcher die Elementarfunktionen, welche in die Definition der Optimierungsfunktionen eingehen, während der Nutzung des Unterwerks verändert.

9. Verfahren gemäß irgendeinem der vorhergehenden Ansprüche, **dadurch gekennzeichnet, dass** das Maximieren (150) aufweist das Ermitteln (144) des Momentanwerts (F(t)) der ausgewählten Optimierungsfunktion in Abhängigkeit von den Werten (G(t)) der Betriebsgrößen, das Modifizieren (146) der Momentanwerte ($\Delta G(t)$) der Betriebsgrößen, das Ermitteln (148) des modifizierten Werts ($\Delta F(t)$) der Optimierungsfunktion in Abhängigkeit von den modifizierten Werten der Betriebsgrößen, das Vergleichen (150) des modifizierten Werts und des Momentanwerts der Beschränkungsfunktion, und, wenn der modifizierte Wert größer ist als der Momentanwert, Zuweisen der modifizierten Werte als maximierte Werte (Gmax(t)) der Betriebsgrößen.

10. Informationsaufzeichnungsmittel, **gekennzeichnet dadurch, dass** es Anweisungen zur Durchführung eines Verfahrens zur Optimierung gemäß irgendeinem der Ansprüche 1 bis 9, wenn die Anweisungen durch eine elektronische Rechnereinrichtung durchgeführt werden, aufweist.

11. Umkehrbares Bahnunterwerk eines Systems (4) zur Versorgung von Schienenfahrzeugen mit elektrischer Leistung, wobei das System an einer Schnittstelle zwischen einem Netz (20) zum Liefern von Wechselstrom und einer Leitung (6) zur Versorgung mit Gleichstrom, welche entlang eines Gleises angeordnet ist und mit welchem ein Schienenfahrzeug (46) elektrisch verbindbar ist, angeordnet ist, wobei das umkehrbare Bahnunterwerk in einem Bremsbetriebsmodus zum Übertragen einer elektrischen Energie, welche über die Leitung erlangt wird, an das Netz und in einem Antriebsbetriebsmodus zum Übertragen einer elektrischen Energie, welche mittels des Netzes geliefert wird, an die Leitung steuerbar ist, wobei das Unterwerk einen Wandler (30) und eine Rechnereinrichtung (29), welche den Wandler (30) steuert, aufweist, **gekennzeichnet dadurch, dass** die Rechnereinrichtung dazu programmiert ist, ein Verfahren zur Optimierung gemäß irgendeinem der Ansprüche 1 bis 9 auszuführen.

12. System (4) zur Versorgung von Schienenfahrzeugen mit elektrischer Leistung, wobei das System an einer Schnittstelle zwischen einem Netz (20) zum Liefern von Wechselstrom und einer Leitung (6) zur Versorgung mit Gleichstrom, welche entlang eines Gleises angeordnet ist und mit welchem ein Schienenfahrzeug (46) elektrisch verbindbar ist, angeordnet ist, wobei das System mindestens ein umkehrbares Bahnunterwerk, welches in einem Bremsbetriebsmodus zum Übertragen einer elektrischen Energie, welche über die Leitung erlangt wird, an das Netz und in einem Antriebsbetriebsmodus zum Übertragen einer elektrischen Energie, welche mittels des Netzes geliefert wird, an die Leitung gesteuert wird, aufweist, **gekennzeichnet dadurch, dass** das Unterwerk dem Unterwerk (Sk) des Anspruchs 11 entspricht.

**Claims**

1. A method for optimizing the operation of a reversible traction substation (Sk) of a power supply system (4) for railway vehicles, the system being situated at the interface between a power supply grid (20) and a DC power line (6), positioned along a track and to which a railway vehicle (46) can be electrically connected, said reversible substation being able to be commanded, in traction operating mode, to transfer electricity delivered by the grid to the line, and, in braking operating mode, to transfer excess recovery electricity captured on the line to the grid, **characterized in that** the method includes:

   - determining (114, 122, 124, 126) a current value (Mc) of a favored operating mode from instantaneous values of multiple operating parameters (H, Vn) of the substation (Sk);
   - maximizing (150) at least one optimization function (F) that depends on the current value (Mc) of the favored operating mode, based on instantaneous values (G(t)) of multiple operating properties of the substation (Sk), so as to obtain maximized values (Gmax(t)) of the operating properties;
   - computing (160) optimized values (Popt(t)) of a plurality of configuration parameters of the substation (Sk) from maximized values (Gmax(t)) of the operating properties, said optimized values (Popt(t)) of said configuration parameters being saved as current values of the configuration parameters (Pc(t)) to control the substation (Sk), the plurality of operating properties being selected from:

- the traction energy, Et;
- the braking energy, Ef;
- the power factor, Cos $\varphi$;
- the harmonic distortion of the current, TH-DI;
- the peak power $\eta$; and
- the mean power P0, on a base of 10 or 15 min., depending on the contractual reference of the energy providers.

2. The method according to claim 1, **characterized in that** the favored operating mode assumes a current value (Mc) in the set including the value +1 when the favored mode corresponds to the traction operating mode, the value -1 when the favored mode corresponds to the braking operating mode, optionally the value 0 when no operating mode is to be favored among the traction operating mode and the braking operating mode, and optionally the value -2 when the favored mode is a standby mode, in which mode no energy is exchanged between the grid and the line, the substation then being controlled to minimize its electricity consumption.

3. The method according to claim 2, **characterized in that** the determination of the current value (Mc) of an operating mode comprises a decision step (114) that implements an algorithm of the decision tree type to determine an instantaneous value (M(t)) from the instantaneous values of the multiple operating parameters (H, Vn) of the substation (Sk) and update (122, 124, 126) the current value (Mc) with the instantaneous value (M(t)).

4. The method according to claim 3, **characterized in that** said algorithm of the decision tree type uses, as input, the instantaneous values of the operating parameters from among an operating interval (H) of the railway vehicles on said track, an AC voltage (Vn) delivered by the grid, and, when the system includes at least two reversible substations, the distance (D) between said at least two substations.

5. The method according to any one of the preceding claims, **characterized in that** the method includes a step (126) for selecting the optimization function (F) to be maximized, based on the current value (Mc) of the favored operating mode.

6. The method according to claim 5, **characterized in**

that the optimization function (F) is a weighted sum of multiple elementary functions.

7. The method according to claim 6, **characterized in that** the selection step (126) uses an algorithm for estimating weights used to weight each elementary function in the optimization function.

8. The method according to claim 6 or claim 7, **characterized in that** the selection step (126) uses an adaptation algorithm serving to cause the elementary functions included in the definition of the optimization function to evolve over the course of the use of said substation.

9. The method according to any one of the preceding claims, **characterized in that** the maximization (150) includes determining (144) the instantaneous value (F(t)) of the selected optimization function as a function of the values ($\hat{G}(t)$) of the operating properties, the modification (146) of the instantaneous values ($\Delta G(t)$) of the operating properties, the determination (148) of the modified value ($\Delta F(t)$) of the optimization function as a function of the modified values of the operating properties, the comparison (150) of the modified value and the instantaneous value of the constraint function, and, when the modified value is greater than the instantaneous value, allocating the modified values as maximized values (Gmax(t)) of the operating properties.

10. An information recording medium, **characterized in that** it includes instructions for executing an optimization method according to any one of claims 1 to 9, when the instructions are executed by an electronic computer.

11. A reversible traction substation for a power supply system (4) for railway vehicles, said system being situated at the interface between an AC supply grid (20) and a DC supply line (6) arranged along a track and to which a railway vehicle (46) can be electrically connected, said reversible substation being controllable in braking operating mode to transfer electricity captured on the line to the grid; and in traction operating mode to transfer electricity delivered by the grid to the line, the substation including a converter (30) and a computer (29) controlling the converter, **characterized in that** the computer is programmed to carry out an optimization method according to any one of claims 1 to 9.

12. A power supply system (4) for railway vehicles, said system being situated at the interface between an AC supply grid (20) and a DC supply line (6), positioned along a track and to which a railway vehicle (46) can be electrically connected, said system including at least one reversible traction substation controlled in braking operating mode to transfer electricity captured on the line to the grid; and in traction operating mode to transfer electricity delivered by the grid to the line, **characterized in that** said substation is according to the substation (Sk) of claim 11.

FIG.1

FIG.2

FIG.3

## FIG.4

FIG.5

## RÉFÉRENCES CITÉES DANS LA DESCRIPTION

**Documents brevets cités dans la description**

- EP 1985490 A1
- CN 101376344 B
- FR 2873332